# EUROPEAN PATENT APPLICATION

(11) **EP 3 588 397 A1**
(43) Date of publication of application: **01.01.2020**
(21) Application number: 19174231.1
(22) Date of filing: 13.05.2019
(51) Int. Cl.: G06Q 10/00, G06Q 10/08

(54) **APPARATUS AND METHODS FOR RETRIEVING LOST PROPERTY**

(30) Priority: 29.06.2018 US 201862691691 P
(71) Applicant: Social CRM Squad Ltd, Edinburgh, Lothian EH2 4AT (GB)
(72) Inventor: Beutelschiess, Frank, Edinburgh, EH3 9BW (GB)

(57) **Abstract**

A method of facilitating retrieval of lost items, the method comprising: providing a computer network for a plurality of owners of items which is accessible by each owner using a computer device; providing a user interface of the network for finders of a lost item; receiving from each owner a user specific data item; assigning to each owner an identifier; providing to each owner a software component which is adapted to generate, at the device utilised by the owner, the image of a computer readable code, wherein the code corresponds to the identifier and a network address; facilitating via the user interface a communication from the finder; and using the user specific data item of the owner, sending to the owner the communication of the finder.

## Description

### TECHNICAL FIELD

The present invention relates to apparatus and methods for retrieving lost property or for identifying and contacting the owners of lost pets. In particular, but not exclusively, the present invention relates to apparatus and methods for retrieving lost property or pets which have increased data security.

### BACKGROUND ART

ID tags, such as for pets and lost property, are well known. Typically, the tags display human readable text of the owner's contact information. This may not always be appropriate. For example, the lost device could be a laptop on which is stored sensitive information. Providing the identification of the owner could increase the risk of cybercrime. It is more secure to keep the contact details anonymous.

QR codes, bar codes and the like are also well known. QR codes are mainly used in commercial marketing activities; when the QR code is scanned, the scanner is directed to the website of the associated company or to a retail site where the associated product can be purchased. Bar codes are mainly used in purchasing transactions. Although such codes are not human readable, code scanners are widely available and it would not be difficult for a person to scan the code, convert it and access the readable text.

It is also known to use radio frequency (RF) tags or Near Field Communication (NFC) tags for tracking items.

In US9569950, a phone number and unique code are displayed on a tag attached to the item of property. A finder of the item can make a phone call and leaves a recorded message which is transmitted to the owner. This is said to maintain privacy for the user. However, the finder is expected to leave contact details in the message transmitted to the owner, and some people may be reluctant to do this. Also, there is no automation and support of the exchange process.

Furthermore, the document describes a subscription process in which the user provides various information including contact information, user shipping and billing information, and the items tagged. After a new user has subscribed, the user is sent the tags for attaching to the associated items. Therefore, there is a central database of user information which includes the name, address and financial data for each user. Apart from this database potentially being vulnerable to hacking, the acquiring and use of personal data has become a topic of concern for many people. Also, under the European General Data Protection Regulations (GDPR), there are the principles of "privacy by design" and "data minimization". Another issue is that some users may be reluctant to apply labels to certain devices such as mobile phones.

It is desirable to provide systems for facilitating the retrieval of lost property in which the finder does not necessarily have to provide contact information to the system. It is desirable to provide systems for facilitating the retrieval of lost property in which the owner only need provide a minimum of personal information to the system.

### DISCLOSURE OF THE INVENTION

According to a first aspect of the present invention there is provided a method of facilitating retrieval of lost items, the method comprising:
providing a computer network for a plurality of owners of items which is accessible by each owner using a computer device;
providing a user interface of the network for finders of a lost item;
receiving from each owner a user specific data item;
assigning to each owner an identifier;
providing to each owner a software component which is adapted to generate, at the device utilised by the owner, the image of a computer readable code, wherein the code corresponds to the identifier and a network address;
facilitating via the user interface a communication from the finder; and
using the user specific data item of the owner, sending to the owner the communication of the finder.

The owner may wish to designate another person to access the network and/or arrange the retrieval of a lost item. For example, in a corporate organisation, the designated person may be an IT administrator. The method may include allowing the owner to designate another person to access the network or to designate another person as a new owner. Throughout this specification, the term 'owner' is intended to also cover designated persons.

The method may include allowing the owner to replace the generated code with a new code.

Optionally, the network address comprises the address of the user interface.

Optionally, the step of generating the image of the computer readable code comprises generating a QR code. Alternatively, the code generated may be a bar code or the like.

The method may utilise Near Field Communication or radio frequency communication for storing and transmitting the computer readable code.

Optionally, the method includes using tokenization for owners accessing the computer network. Optionally, the method includes assigning to each owner a token when the user accesses the computer network. Optionally, each token assigned to an owner is unique.

Optionally, the method includes storing the user specific data item in a datastore or database. Optionally, the method includes storing no contact details for each user.

Optionally, the database is a central datastore or database. Alternatively, the database is a distributed datastore or database.

Alternatively, the user specific data item comprises a contact detail. Optionally, the user specific data item comprises a single contact detail. Optionally, the contact detail is an email address. Alternatively, the contact detail is a telephone number. The telephone number may be a text capable telephone number.

Optionally, the method includes storing the identifier and the user specific data item of each user separately in the datastore or database. Optionally, the method includes storing the identifier in a first database and storing the user specific data item in a second datastore or database.

Optionally, the method includes encrypting the identifier of each user prior to storing in the datastore or database.

Optionally, the method includes encrypting the user specific data item of each user prior to storing in the datastore or database.

Optionally, the item is a computer device belonging to the owner. Optionally, the computer device is one of a laptop, a mobile phone, and a tablet device.

Optionally, the method includes adapting the software component to present to the user information on how to put the generated image of the code on the lock screen or as a desktop image of the owner's computer device.

Optionally, the method includes generating a printer friendly version of the image of the code.

Optionally, the method includes attaching a printed version of the image of the code to the item.

Optionally, the method includes, in response to scanning of the image of the code by the finder, directing the finder to the user interface.

Optionally, the method includes facilitating further communication between the owner and the finder via the network.

Optionally, the method includes providing a messaging system on the network for owners and finders.

Optionally, the method includes encrypting one or more messages to the finder prior to sending the messages over the network. Optionally, the method includes encrypting one or more messages to the owner prior to sending the messages over the network.

Optionally, the method includes creating an asymmetric cryptographic key pair.

Optionally, the method includes creating the asymmetric cryptographic key pair at the owner's device. Optionally, the method includes transmitting only the public key of the key pair to the network.

Optionally, the method includes using the owner's public key as the user specific data item.

Optionally, the method includes creating and assigning a token which is specific to a particular owner's public key.

Optionally, the method includes using the same token for a particular owner each time the owner accesses the network.

Optionally, the method includes encrypting the token using the received owner's public key and sending the encrypted token to the owner.

Optionally, the method includes, at a server of the network, creating a second asymmetric cryptographic key pair.

Optionally, the method includes sending the public key of the second asymmetric cryptographic key pair to the owner.

Optionally, the method includes, at the owner's device, decrypting the encrypted token using the owner's private key.

Optionally, the method includes, at the owner's device, re-encrypting the token using the public key of the second asymmetric cryptographic key pair and sending the re-encrypted token to the network.

Optionally, the method includes, at the server of the network, decrypting the re-encrypted token using the private key of the second asymmetric cryptographic key pair and verifying that the decrypted token matches the token issued to the owner.

Optionally, the method includes encrypting one or more communications to the owner using the public key of the key pair.

Optionally, the method includes time stamping each message prior to sending.

Optionally, the method includes determining a signed message hash for each message. Optionally, the method includes, for a sequence of messages, including a reference to the previous signed message hash.

Optionally, the method includes configuring the network such that it is accessible using the internet.

Optionally, the method includes allowing the owner to specify a reward for recovery of the lost item.

Optionally, the method includes confirming that a lost device has not been internally accessed prior to retrieval.

Optionally, the method includes supplying a plurality of tamper-proof foils to a third party vendor, each foil having one of a plurality of computer readable codes. Optionally, the method includes supplying the foils to the vendor in bulk using packaging that obscures the code and in a random sequence.

Optionally, the method includes attaching a foil to the device such that the foil requires removal for internal access to the device. Optionally, the method includes attaching a foil to the device over a screw which must be unfastened for internal access to the device.

Optionally, the method includes capturing an image of the device before and after the foil has been applied to the device and uploading the images to the network.

According to a second aspect of the present invention there is provided a system for facilitating retrieval of lost items, the system comprising:
a computer network accessible by a plurality of owners of items using a computer device;
a user interface of the network for finders of a lost item;
a processor adapted to assign to each owner an identifier;
storage means adapted to store a user specific data item and the identifier of the owner;
a software component which is provided to each owner and adapted to generate, at the owner's device, an image of a computer readable code, wherein the code corresponds to the identifier and a network address,
wherein the user interface is adapted to facilitate a communication from the finder and, using the user specific data item of the owner, send to the owner the communication from the finder.

Optionally, the code generated is a QR code. Alternatively, the code generated may be a bar code or the like.

The system may utilise Near Field Communication or radio frequency communication for storing and transmitting the computer readable code.

Optionally, the user specific data item is a contact detail of the owner. Optionally, the contact detail is an email address. Optionally, the contact detail is a telephone number. The telephone number may be a text capable telephone number.

Optionally, the system includes a database for storing the identifier and contact detail of each user.

Optionally, the item is a computer device belonging to the owner. Optionally, the computer device is one of a laptop, a mobile phone, and a tablet device.

Optionally, the software component is adapted to generate a printer friendly version of the image of the code.

Optionally, the system is adapted to facilitate further communication between the owner and the finder via the network.

Optionally, the system includes a messaging system on the network for owners and finders.

### BRIEF DESCRIPTION OF THE DRAWINGS

The invention will be described below, by way of example only, with reference to the accompanying drawings, in which:
Figure 1 is a diagrammatic view of a system in accordance with the present invention;
Figure 2 is a view of examples of images of a computer readable code generated by the system of Figure 1; and
Figure 3 is a flow diagram of sequential messages sent using the system of Figure 1.

### SPECIFIC DESCRIPTION OF THE INVENTION

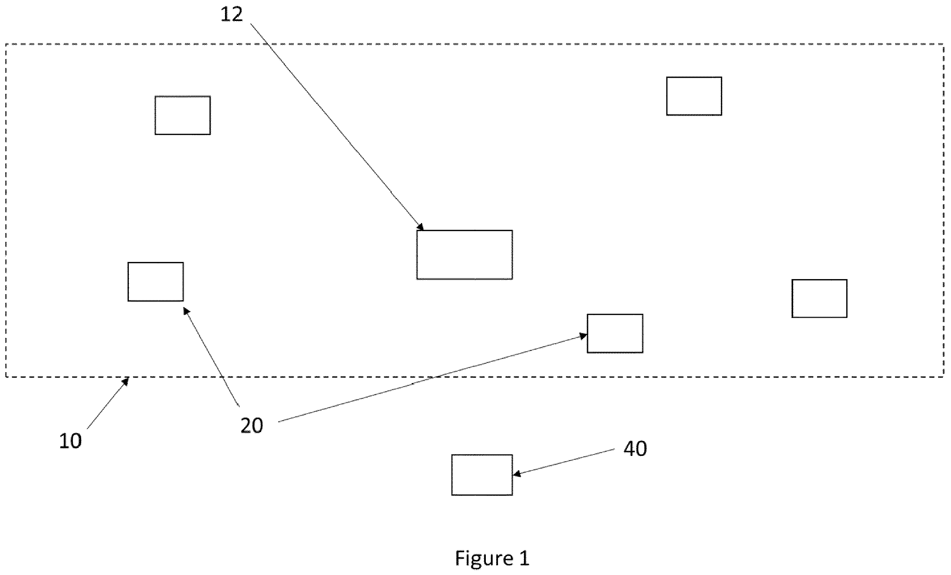

Figure 1 shows a system for facilitating retrieval of lost items. The system comprises a computer network 10 which is accessible by owners of items who are registered members of the network 10. Owners can access the network 10 using their computer devices 20, such as a laptop, PC, smart phone, tablet etc. The network is administered using a network server 12.

According to a first embodiment of the invention, when an owner registers as a member of the network 10, the owner does not need to provide any contact details. Rather, tokenisation is used.

An asymmetric cryptographic key pair is created at the owner's device 20. The owner's public key is used as a user specific data item. A token is created and assigned to the owner's public key. This same token may be used each time the owner accesses the network. The token is encrypted using the received owner's public key and the encrypted token is sent to the owner.

Also, at the server 12, a second asymmetric cryptographic key pair is created. The public key of the second asymmetric cryptographic key pair is also sent to the owner.

At the owner's device 20, the encrypted token is decrypted using the owner's private key. The token is then re-encrypted using the public key of the second asymmetric cryptographic key pair and then sent to the server 12.

At the server 12, the re-encrypted token is decrypted using the private key of the second asymmetric cryptographic key pair. The server 12 then verifies that the decrypted token matches the token issued to the owner. If so, the owner has been validated.

In future sessions when the owner accesses the network 10, the same token may be used but a new asymmetric cryptographic key pair may be created. Indeed, this could be done for each session so that the encryption is effectively a one time pad.

For further security, the IP address of the owner's device can be disguised by using an anonymous proxy server or onion routers like the servers of the Tor Project.

According to a second embodiment of the invention, when an owner registers as a member of the network 10, the owner must provide a single contact detail. Typically, this contact detail is an email address, although it may be a telephone number. It may be a mobile telephone number which allows the sending and receiving of text messages. This is the only personal information which could be used to discover the identity of the owner that is provided to the network 10 at the time of registration. In particular, no contact address, financial details or even the owner's name need be provided. The owner also provides a generic description, such as "mobile phone" or "laptop" for each of the owner's items.

A processor of the network 10 assigns to the owner an identifier. The user specific data item and the identifier of the owner are stored in a central database on the server 12 of the network 10. However, they are stored separately from each other, in separate databases. A token is used to map the two pieces of information. Furthermore, the identifier and the user specific data item of each owner are encrypted prior to storing in the central database.

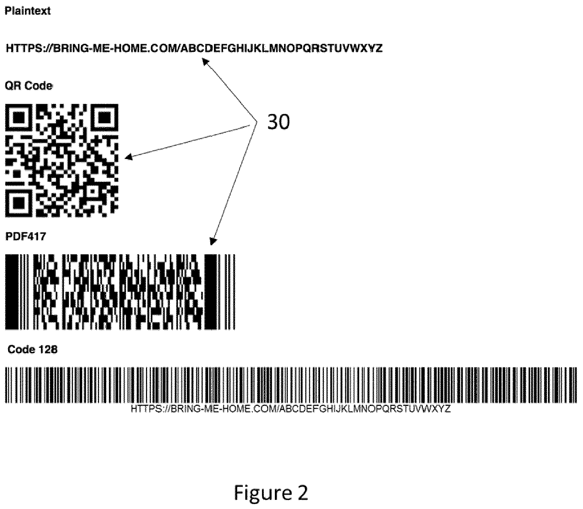

Following successful registration, a software app is provided to the owner by the server 12. This app is adapted to generate locally (at the owner's device) an image 30 of a computer readable code. Examples of these images 30 are shown in Figure 2. A particularly suitable form of the image 30 is a QR code. A number of operating systems now include a QR scanner and QR scanning apps are readily available. It should be noted that the image 30 is not stored on, or even transmitted to, the network 10.

One or more of the owner's items may be an electronic device such as a laptop or smart phone and these devices typically have a lock screen. The software app can display to the owner instructions on how to put the generated image 30 of the code on to the lock screen. Therefore, no physical ID tag is required. Alternatively, the instructions can be displayed as a desktop image.

For non-electronic items, the software app can generate a printer friendly version of the image 30 of the code. The user can therefore print off the image 30 and attach this to the item. This is unlike prior art systems in which the service provider sends tags or stickers to the owner. Such systems require storage of the owner's address details.

Typically, prior art systems also require payment for the ID tags prior to sending, which then requires financial details of the owner to be received and stored. According to this embodiment of the invention, no initial payment from the owner is required. Rather, should the owner lose an item of property, the payment can be associated with facilitating the retrieval of the item.

After successful registration, the software app creates an asymmetric cryptographic key pair, such as RSA 2048 at the owner's device. The public key is transmitted to the server 12 where it is stored. All communications to the owner are encrypted using the public key. The private key, required for decrypting the communications, is not transmitted and is only stored locally on the owner's device 20.

The owner now has a (physical or non-physical) ID tag associated with one or more items of property. In the event that the owner should lose one of these items, the owner can access the network 10 and report to the system that the item is lost. A corresponding flag is then associated with the item within the database.

The network 10 includes a user interface for finders of a lost item. The generated code image 30 corresponds to the unique identifier of the owner and a network address. This may be a URL of the user interface. Therefore, the code, even after being decoded, does not include any personal details of the owner. A finder of a lost item displaying the image 30 can scan the image 30 using their own device 40. When this is done, the finder is directed to the user interface.

The action of the finder accessing the user interface also sends an alert to the system that an item has been found. The system first responds by looking up the database for the lost item. If the item has been flagged as lost then the system will directly move on to notifying the owner that the item has been found. If not (for example, many owners are likely to test the system by scanning the tags of their own items), then an intermediary communication can first be sent to the owner. This could be, for example, a message with the text "have you lost your [detail of item]? If so, please click 'yes'" as well as 'yes' and 'no' option buttons.

The landing page of the URL displays information to the finder to explain its purpose and to request the finder's assistance in achieving retrieval of the lost item. During registration, the owner is given the option of offering, and setting the value of, a reward to the finder for this assistance.

If the finder is willing to help with retrieval of the lost item, the finder can input a communication to the user interface. This can be a contact email address or phone number. However, if the finder is reluctant to provide this, the communication could, say, suggest a meeting place and time for handing back the item. The communication from the finder is encrypted before sending to the network server 12.

If the item has been verified as lost by the owner, the communication from the finder is relayed to the owner (using the only contact detail stored for the owner). Therefore, the system is acting as a middle man and both the owner and finder can retain a high degree of anonymity.

Further messages between the owner and finder may be required to negotiate how the item is to be returned. This can be done via the network 10, again avoiding the need for any direct contact between the owner and finder.

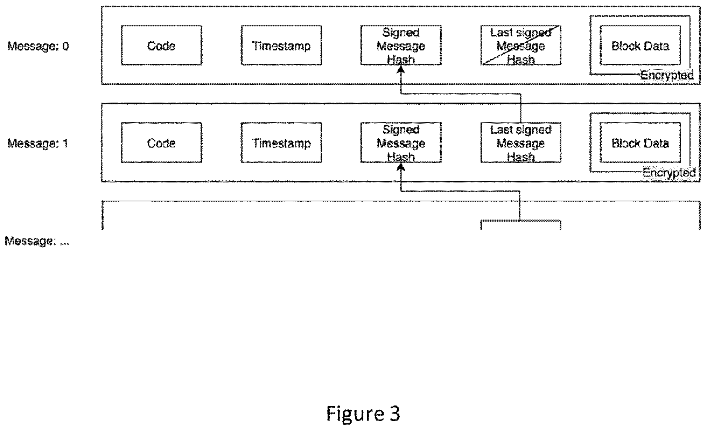

Each message is time stamped and encrypted before sending. Each sequential message references the previous signed message hash. This is shown in Figure 3. This verifies that a particular message in the sequence has not been intercepted and tampered with by a third party.

Especially for devices that hold sensitive information, the owner would like to be certain that a lost device has not been internally accessed prior to retrieval. This can be done in the following manner.

Tamper-proof foils can be supplied to a third party vendor. Each foil has one of a large number of different computer readable codes. The foils are supplied to the vendor in bulk with packaging that obscures the code and in a random sequence. Therefore, even the vendor does not know which codes are being bought by which customers.

The owner purchases a foil for each device to be protected. The foil is attached to the device in such a way that it needs to be removed for someone to internally access the device. For example, the foil can be attached to the device over a screw which needs to be unfastened for someone to internally access the device. The owner can capture an image of the device before and after the foil has been applied to the device. These images can be uploaded to the network. The server stores the images. The server also calculates secure fingerprint of that image. When the device is retrieved, the owner can verify that the foil is undamaged and that the code on the foil is identical to the uploaded image. The server can validate and testify that the fingerprints before and after are identical.

Various modifications and improvements can be made to the above without departing from the scope of the invention.

## Claims

1. A method of facilitating retrieval of lost items, the method comprising:
providing a computer network for a plurality of owners of items which is accessible by each owner using a computer device;
providing a user interface of the network for finders of a lost item;
receiving from each owner a user specific data item;
assigning to each owner an identifier;
providing to each owner a software component which is adapted to generate, at the device utilised by the owner, the image of a computer readable code, wherein the code corresponds to the identifier and a network address;
facilitating via the user interface a communication from the finder; and
using the user specific data item of the owner, sending to the owner the communication of the finder.

2. A method as claimed in any preceding claim, wherein the step of generating the image of the computer readable code comprises generating a QR code.

3. A method as claimed in claim 1 or 2, wherein the user specific data item comprises a contact detail.

4. A method as claimed in any preceding claim, wherein the method includes assigning to each user a token when accessing the computer network.

5. A method as claimed in any preceding claim, wherein the method includes storing the identifier and the user specific data item of each user separately in the database, and wherein the method includes encrypting the identifier and the user specific data item of each user prior to storing in the central database.

6. A method as claimed in any preceding claim, wherein the item is a computer device belonging to the owner, and wherein the method includes adapting the software component to present to the user information on how to put the generated image of the code on the lock screen or as a desktop image of the owner's computer device.

7. A method as claimed in any preceding claim, wherein the method includes, in response to scanning of the image of the code by the finder, directing the finder to the user interface.

8. A method as claimed in any preceding claim, wherein the method includes creating an asymmetric cryptographic key pair at the owner's device, and wherein the method includes transmitting only the public key of the key pair to the network.

9. A method as claimed in claim 8, wherein the method includes using the owner's public key as the user specific data item.

10. A method as claimed in claim 8 or 9, wherein the method includes creating and assigning a token which is specific to a particular owner's public key, and wherein the method includes encrypting the token using the received owner's public key and sending the encrypted token to the owner.

11. A method as claimed in any of claims 8 to 10, wherein the method includes, at a server of the network, creating a second asymmetric cryptographic key pair, and wherein the method includes sending the public key of the second asymmetric cryptographic key pair to the owner, and wherein the method includes, at the owner's device, decrypting the encrypted token using the owner's private key.

12. A method as claimed in claim 11, wherein the method includes, at the owner's device, re-encrypting the token using the public key of the second asymmetric cryptographic key pair and sending the re-encrypted token to the network, and wherein the method includes, at the server of the network, decrypting the re-encrypted token using the private key of the second asymmetric cryptographic key pair and verifying that the decrypted token matches the token issued to the owner.

13. A method as claimed in any of claims 8 to 12, wherein the method includes encrypting one or more communications to the owner using the public key of the key pair.

14. A method as claimed in any preceding claim, wherein the method includes confirming that a lost device has not been internally accessed prior to retrieval.

15. A method as claimed in claim 14, wherein the method includes affixing a tamper-proof device to the device, capturing an image of the device before and after the tamper-proof device has been applied to the device, and uploading the images to the network.
